# EUROPÄISCHE PATENTSCHRIFT

(11) **EP 2 508 315 B1**
(45) Veröffentlichungstag und Bekanntmachung des Hinweises auf die Patenterteilung: **18.09.2013**
(21) Anmeldenummer: 12002010.2
(22) Anmeldetag: 22.03.2012
(51) Int. Cl.: B27L 7/06

(54) **Spaltkeil**
Splitting wedge
Coin à refendre

(30) Priorität: 07.04.2011 DE 202011004990 U; 07.04.2011 DE 202011004991 U
(43) Veröffentlichungstag der Anmeldung: 10.10.2012
(73) Patentinhaber: Gedore-Werkzeugfabrik GmbH & Co. KG, 42899 Remscheid (DE)
(72) Erfinder: Tasillo, Claudia, 44265 Dortmund (DE)
(74) Vertreter: Stenger, Watzke & Ring

(56) Entgegenhaltungen:
- DE-A1- 1 923 349
- DE-A1- 3 903 079
- DE-C- 817 061
- DE-C- 921 601
- DE-U1- 20 314 185
- DE-U1- 29 807 953
- DE-U1- 29 819 561
- DE-U1-202009 000 235
- FR-A1- 2 666 270
- FR-A1- 2 862 903

## Beschreibung

Die Erfindung betrifft einen Spaltkeil gemäss dem Oberbegriff des Anspruchs 1. Ein solcher Spaltkeil gemäss dem Oberbegriff des Anspruchs 1. Ein solcher Spaltkeil ist aus der DE 298 07 953 U bekannt.

Spaltkeile sind aus dem Stand der Technik an sich gut bekannt, weshalb es eines gesonderten druckschriftlichen Nachweises dem Grunde nach nicht bedarf. Es sei deshalb auch nur beispielshaft auf die DE 20 2009 000 235 und die FR 2666270, die beide jeweils einen Spaltkeil in der besonderen Ausgestaltung als Drehspaltkeil offenbaren, die DE 8503675, die DE 633 270 und die AT 009 674 verwiesen.

Neben Spaltkeilen sind aus dem Stand der Technik auch Fällkeile bekannt, bezüglich derer beispielsweise auf die DE 921 601, die DE 296 12 469 und die DE 203 14 185 verwiesen sei.

Es gilt bei Keilen ganz grundsätzlich zwischen Fällkeilen einerseits und Spaltkeilen andererseits zu unterscheiden. Der jeweilige Anwendungsbereich ist ein völlig anderer, was auch in der Keilausgestaltung zum Ausdruck kommt.

Fällkeile dienen grundsätzlich dazu, einen Fällschnitt offenzuhalten. Im bestimmungsgemäßen Verwendungsfall verhindert ein Fällkeil, dass das Gewicht des zu fällenden Baumes auf die Motorsäge bzw. das Motorsägeblatt drückt und dieses einklemmt. Zudem dient der Fällkeil dazu, den Stamm des zu fällenden Baumes mit jedem Schlag weiter in die Fällrichtung zu treiben. Bei richtiger Handhabung wird der zu fällende Baum mithin nicht "umgesägt", sondern "umgekeilt". Um dies zu erreichen, ist der Fällkeil möglichst frühzeitig in den Fällschnitt einzusetzen. Danach ist abwechselnd zu Keilen und zu Schneiden bis die richtige Bruchleistenbreite erreicht ist, was dann zur Fällung des Baumes führt.

Um zu verhindern, dass ein in einen Fällschnitt eingesetzter Fällkeil aus dem Fällschnitt wieder heraus rutscht, d.h. zurück gleitet oder rutscht, ist es aus dem Stand der Technik bekannt, im schneidennahen Bereich des Fällkeils die Keilflächen mit Vorsprüngen auszurüsten. Dies ist beispielsweise aus der DE 921 601 bekannt. Ferner ist es bekannt, die Keilflächen eines Fällkeils mit Längsrippen und/oder V-Verzahnungen auszurüsten, so zum Beispiel aus der DE 203 14 185. Als Material für vorbekannte Fällkeile kommt insbesondere Kunststoff oder Aluminium in Frage, wobei auch eine kombinierte Verwendung dieser Materialien möglich ist, wie zum Beispiel mit der DE 296 12 469 offenbart.

Ein Spaltkeil dient im Unterschied zu einem Fällkeil dazu, Holz, insbesondere Brennholz zu spalten. Er findet insbesondere in Verbindung mit einem Spalthammer Verwendung. Anders als ein Fällkeil wird ein Spaltkeil in der Regel nicht in einen durch eine Säge ausgebildeten Fällschnitt eingeführt. Aus diesem Grunde verfügt ein Spaltkeil auch über eine vergleichsweise scharfe Schneide, die das Ansetzen an das zu spaltende Holz erleichtert. In der Regel bestehen Spaltkeile aus Aluminium. Kunststoff als Material hat sich hier nicht durchgesetzt. Dieses findet eher bei Fällkeilen Verwendung.

Eine Sonderform des Spaltkeils ist der Drehspaltkeil. Drehspaltkeile zeichnen sich dadurch aus, dass die Keilflächen zueinander verdreht ausgebildet sind, und zwar je nach Ausgestaltungsform zwischen 45° bis 90°. Durch die Verdrehung der Keilflächen verbreitert sich der Keilwinkel des Keils, wodurch sich beim Einschlagen des Keils die Spaltwirkung erhöht.

Um bei einem Einschlagen des Spaltkeils einem "Herausspringen" desselben entgegenzuwirken, ist es aus dem Stand der Technik bekannt geworden, die sich umfangsseitig an die Keilflächen des Keils anschließenden Stirnflächen mit einem Sägezahnprofil auszurüsten. Ein solcher Spaltkeil ist beispielsweise aus der DE 20 2009 000 235 bekannt geworden.

Obgleich Keile in unterschiedlichen Ausgestaltungsformen aus dem Stand der Technik in vielerlei Variation bekannt geworden sind, besteht der Bedarf nach einem neuartig ausgebildeten Spaltkeil, der aufgrund seiner konstruktiven Ausgestaltung insbesondere eine vereinfachte Handhabung ermöglicht. Es ist deshalb die Aufgabe der Erfindung, einen neuartigen Spaltkeil vorzuschlagen.

Zur Lösung dieser Aufgabe wird mit der Erfindung vorgeschlagen ein Spaltkeil mit einem eine erste Keilfläche und eine zweite Keilfläche bereitstellenden Grundkörper aus Aluminium, der einendseitig eine Schneide und anderendseitig einen eine Schlagfläche bereitstellenden Keilkopf aufweist, wobei die erste Keilfläche ein Sägezahnprofil und die zweite Keilfläche ein Fischgratprofil aufweist, wobei die Keilflächen in Richtung auf die Schneide jeweils in eine Ansatzfläche übergehen, wobei die in Verlängerung der ersten Keilfläche ausgebildete Ansatzfläche dreieckförmig ausgebildete Widerhaken und eine Führungsrippe aufweist, welche Führungsrippe in Längsrichtung verlaufend mittig zur Schneidkante der Schneide ausgebildet ist.

Der Spaltkeil nach der Erfindung verfügt in an sich bekannter Weise über zwei Keilflächen. Dabei ist vorgesehen, dass die eine der beiden Keilflächen ein Sägezahnprofil und die andere der beiden Keilflächen ein Fischgratprofil aufweist. Sowohl das Sägezahnprofil als auch das Fischgratprofil sollen im bestimmungsgemäßen Verwendungsfall dafür Sorge tragen, dass sich der Spaltkeil im Holz verankert, so dass ein "Herausspringen" infolge einer Schlagbeanspruchung sowie ein einfaches "Herausrutschen" des Spaltkeils aus dem Schlagschnitt oder dem Fällschnitt verhindert ist. Die Ausgestaltung derartiger Profile ist aus dem Stand der Technik an sich nicht unbekannt. Die Besonderheit nach der Erfindung besteht darin, dass die beiden Profile miteinander kombiniert sind. Diese Profilkombination erbringt den synergetischen Effekt einer verbesserten Verankerung des Keils im Holz. Dies deshalb, weil es aufgrund der Faserstruktur des Holzes dazu kommen kann, dass ein in bestimmter Weise ausgebildetes Profil versagt und einen sicheren Halt des Keils im Holz insbesondere vor einem "Herausspringen" nicht gewährleistet ist. Aufgrund der Kombination zweier unterschiedlich ausgebildeter Profile kann diese Gefahr gebannt werden. Versagt nämlich die Keilsicherung bezüglich eines der beiden Profile, so greift zumindest das andere der beiden Profile. Doch auch selbst dann, wenn beide Keilprofile eine wunschgemäße Verankerung des Keils im Holz bewirken, so hat die unterschiedliche Profilwahl den ergänzenden Vorteil, dass ein besonders sicherer Halt des Keils im Holz gewährleistet ist, womit insbesondere die Gefahr des "Herausspringens" infolge einer Schlagbeanspruchung beispielsweise durch einen Spalthammer gewährleistet ist.

Die vorbeschriebene Profilausgestaltung ist mit der Ausgestaltung von Widerhaken kombiniert. Dabei ist vorgesehen, dass die Widerhaken schneidkantennah im Bereich einer die Keilflächen mit der Schneide verbindenden Ansatzflächen ausgebildet sind. Derlei Widerhaken dienen ebenfalls dem Herausfallschutz. Im Unterschied zu der vorerläuterten Profilausgestaltung sollen die Widerhaken allerdings nicht dazu dienen, den bereits eingetriebenen Keil vor einem "Herausspringen" oder "Herausrutschen" zu sichern. Die Widerhaken dienen vielmehr im Wesentlichen dazu, den Keil nach einem Einführen in den Spaltschnitt oder den Fällschnitt zu halten bzw. ihn nach einem Anschlagen sicher zu positionieren, damit im Weiteren ein bestimmungsgemäßes Einschlagen bzw. Eintreiben des Keils ermöglicht ist, d.h. insbesondere die Gefahr eines Umkippens vor der Einbringung eines ersten Eintreibschlages gebannt ist.

Erfindungsgemäß sind die Widerhaken mit einer Führungsrippe kombiniert. Diese Führungsrippe ist in Längsrichtung des Keils ausgebildet und mittig zur Schneidkante der Schneide des Keils ausgerichtet. Sinn und Zweck dieser Führungsrippe ist es, für einen geradlinigen Eintrieb des Keils Sorge zu tragen. Insbesondere ein Schrägstellen des Keils innerhalb des Fällschnittes oder des Spaltschnittes soll so vermieden werden.

Die Besonderheit des mit der Erfindung vorgeschlagenen Spaltkeils liegt in dem synergetischen Effekt, der sich durch die Kombination der vorerläuterten Einzelmerkmale ergibt, d.h. der kombinierten Ausgestaltung von Sägezahnprofil, Fischgratprofil, Widerhaken und Führungsrippe. Bislang wurden diese Einzelmaßnahmen nicht in Kombination genutzt oder angewendet. Dies deshalb, weil in der Fachwelt bislang das Vorurteil galt, dass eine der angesprochenen Maßnahmen ausreichen würde, um einen effektiven Herausspring- oder Herausrutschschutz zu gewährleisten. Mit der Ausgestaltung nach der Erfindung wurde nun erstmals in überraschender Weise festgestellt, dass bei einer konstruktiven Kombination der vorerläuterten Maßnahmen eine signifikante Verbesserung erreicht ist und insbesondere der Herausspringschutz erheblich verbessert ist. Damit erweist sich der erfindungsgemäße Spaltkeil in der Handhabung als sehr viel sicherer und einfacher als die aus dem Stand der Technik vorbekannten Spaltkeile. Diese mit der erfindungsgemäßen Ausgestaltung erreichte signifikante Verbesserung ist auf den synergetischen Effekt zurückzuführen, der sich in Kombination insbesondere des Sägezahnprofils und des Fischgratprofils einerseits sowie der Widerhaken und der Führungsrippe andererseits einstellt. Widerhaken kamen bislang nur bei Fällkeilen zum Einsatz, weshalb in der Fachwelt das Vorurteil bestand, diese nicht auf einen Spaltkeil übertragen zu können, da nämlich der Spaltkeil anders als ein Fällkeil in der Regel nicht in einen Fällschnitt eingeführt, sondern auf das zu bearbeitende, in der Regel zu spaltende Holz angesetzt wird.

Dank der erfindungsgemäßen Ausgestaltung ist nun sichergestellt, dass der Spaltkeil in bestimmungsgemäßer Weise wie folgt angesetzt werden kann. Mit einem ersten Schlag, der auch als Fixierungsschlag bezeichnet werden kann, wird der Spaltkeil in das zu spaltende Holz eingetrieben. Infolge dessen bildet sich ein Spaltschnitt aus, in welchen sich der Spaltkeil dank seiner Widerhaken-Ausgestaltung verankert bzw. verkrallt. Dabei dient die in Kombination mit den Widerhaken ausgebildete Führungsrippe dazu, dass ein gradlinig geführtes Eintreiben des Spaltkeils gewährleistet ist. Nach Vollendung dieses Fixierungsschlages sitzt der Spaltkeil sicher im Spaltschnitt, gehalten durch die Widerhaken. Im Zuge des weiteren Eintreibens des Spaltkeils übernehmen dann die schon vorerläuterten und auf den Keilflächen ausgebildeten Profile ein Halten des Spaltkeils im Holz, wobei aufgrund der unterschiedlichen Ausgestaltung der Profile sichergestellt ist, dass ein verbesserter Schutz insbesondere vor einem "Herausspringen" des Keils aus dem Spaltschnitt gewährleistet ist. Diese Schutzwirkung ergibt sich insbesondere auch bei sehr feuchtem oder nassem Holz, da die Fischgratprofil-Ausgestaltung anders als die Sägezahnprofil-Ausgestaltung nicht über Rippen, sondern über Rillen verfügt, die einem verstärkten Wasser- bzw. Saftabtransport in Richtung des offenen Spalts ermöglichen.

Der Keilkopf des Spaltkeils kann im Querschnitt oval ausgebildet sein, was im Sinne der Erfindung eine von der kreisförmigen Ausgestaltung abweichende Formgebung meint. In einer besonders bevorzugten Ausgestaltung der Erfindung kann der Keilkopf im Querschnitt ellipsenförmig ausgebildet sein, was eine Sonderform der ovalen Ausgestaltung darstellt.

Die im Querschnitt ovale Ausgestaltung des Keilkopfes des Spaltkeils verbessert dessen Handhabung. Dies deshalb, weil es die ovale Querschnittsausgestaltung ermöglicht, bei Aufnahme des Spaltkeils die Lageausrichtung desselben in der Hand haptisch zu erkennen. Aufgrund der "unrunden" Ausgestaltung des Keilkopfes ist es einem Verwender des Spaltkeils möglich, die Ausrichtung des Spaltkeils mit Bezug auf seine Keilflächen durch einfache Berührung des Keilkopfes mit der Hand zu erkennen, d.h. ohne Hinsehen zu müssen. Dies vereinfacht die Handhabung des Spaltkeils insgesamt, da er quasi "blind" verwendet werden kann, ohne dass verwenderseitig die Gefahr besteht, den Spaltkeil ungewollt verdreht oder falsch ausgerichtet anzusetzen oder in einen Spaltschnitt einzuführen.

Es ist eine geometrische Ausgestaltung hinsichtlich des Spaltkeils bevorzugt, gemäß welcher der Keilkopf im Querschnitt ellipsenförmig ausgebildet ist und die vom Grundkörper des Spaltkeils bereitgestellten Keilflächen in Richtung der großen Halbachsen des ellipsenförmigen Keilkopfes verlaufen. Die Stirnflächen des Spaltkeils verlaufen dementsprechend in Richtung der kleinen Halbachsen des ellipsenförmig ausgebildeten Keilkopfes. Ein Verwender kann somit durch einfaches in die Hand nehmen des Keilkopfes aufgrund haptischer Sennsierung erkennen, wie der Spaltkeil hinsichtlich der von ihm bereitgestellten Keilflächen ausgerichtet in der Hand zu liegen kommt.

Gemäß einem weiteren Merkmal der Erfindung ist vorgesehen, dass sich an die Keilflächen in Richtung auf die Schneide die schon vorbeschriebenen Ansatzflächen anschließen, die Keilflächen also unter Zwischenschaltung der Ansatzflächen in die Schneide übergehen. Dabei kann eine Ansatzfläche stirnseitig mit Abschrägungen versehen, so dass sich in der Konsequenz eine Schneide ergibt, die in einer Ebene mit den großen Halbachsen des vorzugsweise im Querschnitt ellipsenförmig ausgebildeten Keilkopfes liegt, die in ihren geometrischen Abmessungen aber kleiner als die Summe der beiden Halbachsen ausgebildet ist. Diese Ausgestaltung ermöglicht eine vereinfachte Einführung des Keils in einen Fällschnitt. Darüber hinaus ist ein Ansetzen des Keils auf einem zu spaltenden Holz vereinfacht. Für den ersten Eintrieb bedarf es gemäß einem weiteren Vorteil dieser Ausgestaltung weniger Kraft, d.h. im Vergleich zu einer Ausgestaltung ohne erfindungsgemäße Abschrägungen. Um die Eintreibkraft weiter zu verringern sind gemäß einem weiteren Merkmal der Erfindung Schneidflächen vorgesehen, die in ihrer Winkelausgestaltung derart bemessen sind, dass eine scharfkantig zulaufende Schneide ausgebildet ist.

Die für ein erstes Eintreiben erforderliche Eintreibkraft kann im Übrigen noch dadurch in vorteilhafter Weise reduziert sein, dass nur eine der beiden Ansatzflächen über Widerhaken und/oder eine Führungsrippe verfügt. Um für einen sicheren Halt des Keils in einem Spaltschnitt nach einem ersten Eintreiben zu sorgen, ist es ausreichend, nur eine der beiden Ansatzflächen mit entsprechenden Widerhaken bzw. einer Führungsrippe auszurüsten. Die andere der beiden Ansatzflächen kann indes glatt ausgebildet sein, um eine möglichst geringe Eintreibkraft erforderlich zu machen. Dabei ist bevorzugterweise vorgesehen, dass die mit Widerhaken bzw. einer Führungsrippe ausgerüstete Ansatzfläche in Verlängerung der ersten Keilfläche ausgebildet ist, d.h. derjenigen Keilfläche, die das Sägezahnprofil aufweist. Diese Ausgestaltung ist deshalb bevorzugt, weil die mit dem Sägezahnprofil ausgerüstete Keilfläche vorzugsweise über zwei Saftrillen verfügt, die in Verlängerung der vorzugsweise paarig angeordneten Widerhaken ausgebildet sind. Aufgrund der durch die Widerhaken bedingten Materialverdrängung im Holz ausgepresstes Wasser kann so unmittelbar in die den Widerhaken in Längsrichtung des Keils nachfolgenden Saftrillen überführt werden. Die Handhabung des Keils wird so insgesamt vereinfacht und sicherer.

Die Stirnflächen des Keils sind im Unterschied zur Ausgestaltung beispielsweise nach der DE 20 2009 000 235 glatt ausgebildet. Untersuchungen haben erbracht, dass insbesondere die profilierte Ausgestaltung der Keilflächen einen "Herausspring"-Schutz bietet, weshalb bei dem erfindungsgemäßen Keil anders als nach der Lehre der DE 20 2009 000 235 nicht die Stirnflächen, sondern die Keilflächen profiliert ausgebildet sind.

Weitere Merkmale und Vorteile der Erfindung ergeben sich aus der nachfolgenden Beschreibung anhand der Figuren. Dabei zeigen:
- Fig. 1: in einer ersten Draufsicht den erfindungsgemäßen Keil;
- Fig. 2: in einer Seitenansicht den erfindungsgemäßen Keil;
- Fig. 3: in einer zweiten Draufsicht den erfindungsgemäßen Keil;
- Fig. 4: den erfindungsgemäßen Keil in der Ansicht gemäß Pfeil IV nach Fig. 1;
- Fig. 5: in eine ersten perspektivischen Darstellung den erfindungsgemäßen Keil;
- Fig. 6: in einer zweiten perspektivischen Darstellung den erfindungsgemäßen Keil;
- Fig. 7: in einer ersten perspektivischen Darstellung den erfindungsgemäßen Keil in einer zweiten Ausführungsform;
- Fig. 8: in einer zweiten perspektivischen Darstellung den erfindungsgemäßen Keil nach Figur 7;
- Fig. 9: in einer ersten Draufsicht den erfindungsgemäßen Keil nach Figur 7;
- Fig. 10: den erfindungsgemäßen Keil nach Figur 7 in der Ansicht gemäß Pfeil X nach Figur 9;
- Fig. 11: in einer Seitenansicht den erfindungsgemäßen Keil nach Figur 7 und
- Fig. 12: in einer zweiten Draufsicht den erfindungsgemäßen Keil nach Figur 7;

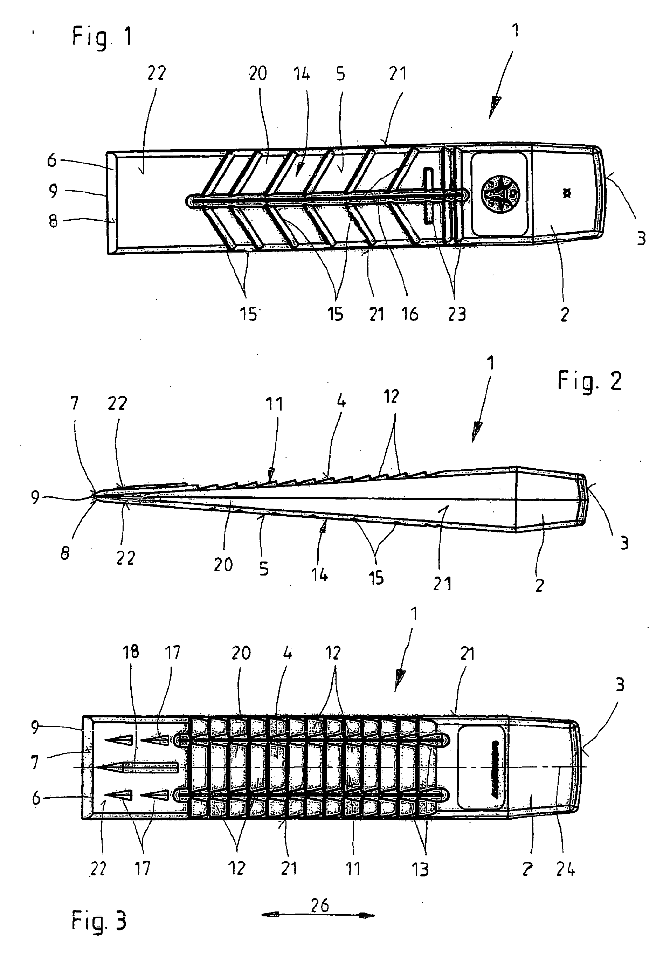

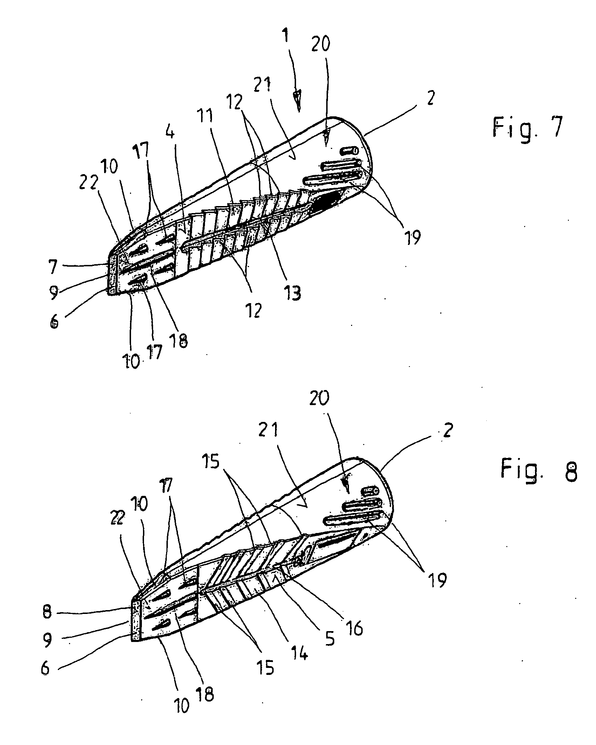

Die Figuren 1 bis 6 lassen den erfindungsgemäßen Spaltkeil in einer ersten Ausgestaltung erkennen. Die Figuren 7 bis 12 zeigen den erfindungsgemäßen Spaltkeil in einer zweiten Ausgestaltung, und zwar in der Ausgestaltung als Drehspaltkeil.

Der Spaltkeil ist aus Aluminium bzw. einer Aluminiumlegierung gebildet. Er ist einstückig vorzugsweise als Schmiede- oder Gussteil ausgebildet. Er verfügt über einen Grundkörper 20. Dieser weist einendseitig einen Keilkopf sowie anderendseitig eine Schneide 6 auf.

Der Keilkopf 2 stellt eine Schlagfläche 3 bereit. Diese Schlagfläche 3 ist, wie insbesondere die Darstellung nach den Figuren 1, 3 und 4 erkennen lässt, in Richtung der Querachse 25 ballig ausgebildet. Diese ballige Ausgestaltung erbringt den Vorteil, dass eine vereinfachte Schlageinwirkung mit einem Schlagwerkzeug, beispielsweise einem Spalthammer ermöglicht ist. Zum einen ist ein zielgenaueres Treffen des Keilkopfes 2 ermöglicht und Beschädigungen des Keils 1 bei einer außermittig auf den Keilkopf 2 eintreffenden Schlageinwirkung werden weitestgehend vermieden. Darüber hinaus erfolgt auch bei einer nicht mittigen Krafteinwirkung eine Krafteinleitung im Wesentlichen in Richtung der Längsachse 24, d.h. in Längsrichtung 26 des Keils 1, vgl. Fig. 3. Das Auftreten von Seitenkräften wird im Wesentlichen verhindert.

Die Figuren 7 bis 12 zeigen den erfindungsgemäßen Keil in der besonderen Ausgestaltung als Drehspaltkeil. Gemäß dieser besonderen Ausgestaltung ist der Keilkopf 2 im Querschnitt oval, vorzugsweise ellipsenförmig ausgebildet. Diese Art der Keilkopfausgestaltung gestattet es einem Verwender, die Ausrichtung des Keils 1 in der ihn aufnehmenden Hand des Verwenders haptisch zu erfassen.

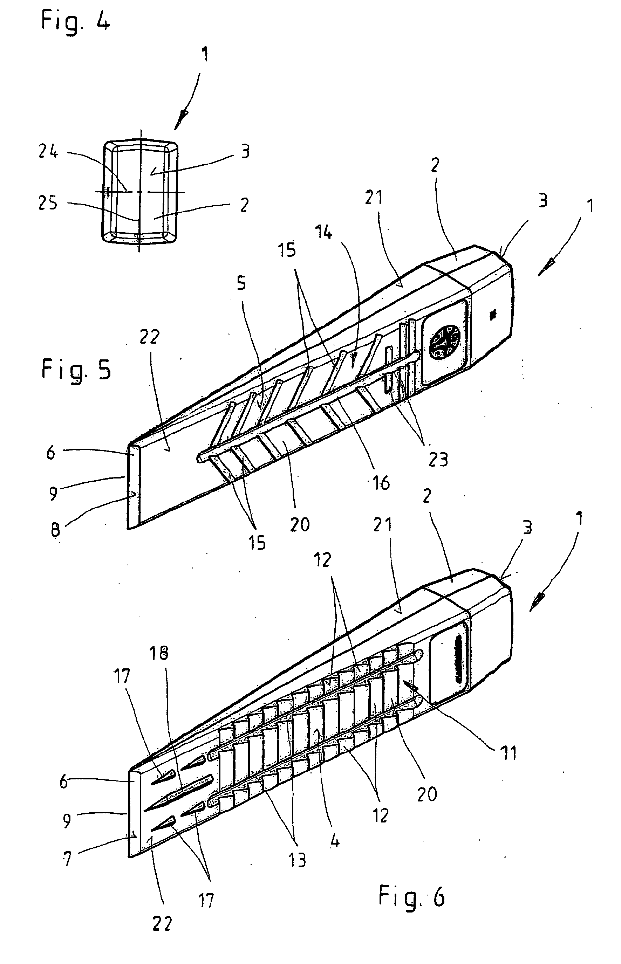

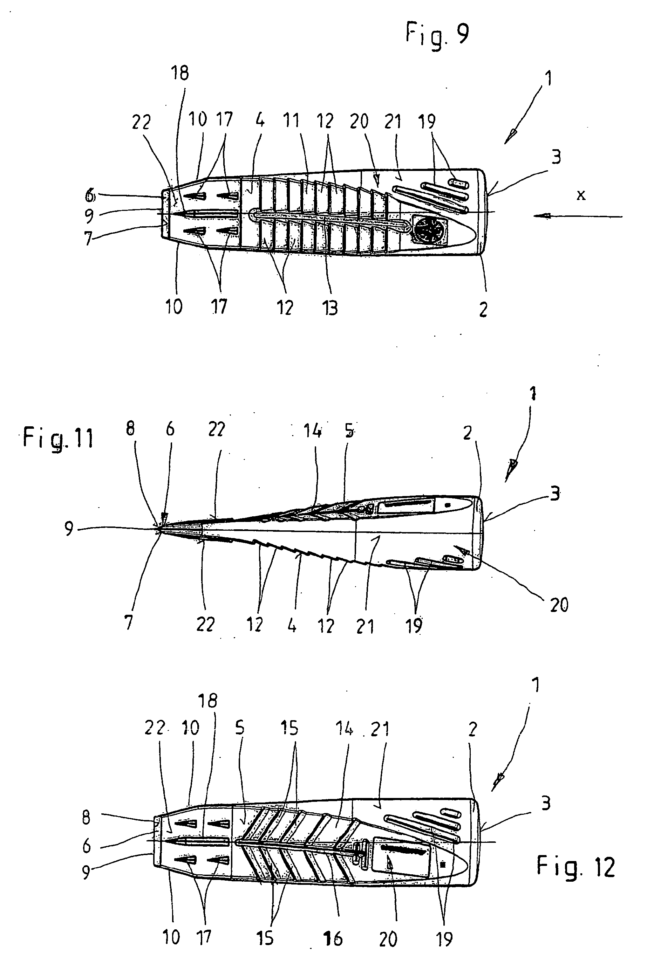

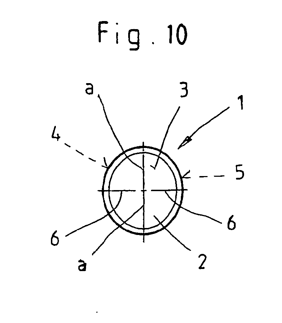

Der Grundkörper 20 stellt zwei Keilflächen 4 und 5 bereit. Diese Keilflächen sind, wie insbesondere eine Zusammenschau der Figuren 1 und 3 erkennen lässt, einander gegenüberliegend und in Richtung der Schneide 6 ausgerichtet. Die umfangsseitig die beiden Keilflächen 4 und 5 miteinander verbindenden Stirnflächen 21 sind ebenfalls in Richtung der Schneide 6 ausgerichtet, was sich insbesondere aus einer Zusammenschau der Figuren 5 und 6 ergibt. Diese Ausrichtung der Keilflächen 4 und 5 bzw. der sie umfangsseitig miteinander verbindenden Stirnflächen 21 kann verwenderseitig durch die Ergreifung des Keilkopfes 2 erfasst werden, wenn dieser im Falle der Ausbildung nach den Figuren 7 bis 12 einen Keilkopf 2 mit ovalem Querschnitt aufweist. Im Falle der Ausgestaltung des Keils 1 als Drehspaltkeil gemäß der Figuren 7 bis 12 sind die Keilflächen 4 und 5 einander gegenüberliegend und in Richtung der durch die beiden großen Halbachsen a bestimmten Ebene des Keilkopfes 2 ausgerichtet. Die umfangsseitig die beiden Keilflächen 4 und 5 miteinander verbindenden Stirnflächen 21 sind in Richtung der durch die beiden kleinen Halbachsen b bestimmten Ebene ausgerichtet, was sich insbesondere aus einer Zusammenschau der Figuren 10 und 11 ergibt.

Die erste der beiden Keilflächen 4 ist mit einem Sägezahnprofil 11 ausgestattet, wie es beispielsweise in Fig. 3 gezeigt ist. Das Sägezahnprofil 11 besteht aus einer Mehrzahl von Rippen 12, die in Längsrichtung 26 des Keils 1 bevorzugterweise gleich beabstandet zueinander angeordnet sind. Im bestimmungsgemäßen Verwendungsfall krallt sich das Sägezahnprofil 11 im Holz fest, wodurch ein rückwärtsgerichteter Austrieb des Keils 1 verhindert ist.

Zum Zwecke der Abführung von Flüssigkeiten, insbesondere Baumsaft kann eine Saftrille 16 (Figur 9) oder können zwei Saftrillen 13 (Figur 3) auf der Keilfläche 4 ausgebildet sein.

Die zweite Keilfläche 5 ist im Unterschied zur ersten Keilfläche 4 nicht mit einem Sägezahnprofil 11, sondern mit einem Fischgratprofil 14 ausgerüstet. Dabei wird das Fischgratprofil 14 nicht durch Rippen, sondern durch Vertiefungen in Form von Rillen 15 gebildet, welche Rillen V-förmig ausgebildet sind, also über Teilschenkel verfügen, die quer zur Längsachse des Keils 1 verlaufend ausgerichtet sind. Dabei können die Rillen 15 in Längsrichtung 26 des Keils 1 bevorzugterweise nicht gleich beabstandet voneinander ausgebildet sind. Bevorzugt ist indes eine Abstandsanordnung, dergemäß der Abstand zwischen zwei benachbarten Rillen 15 in Richtung auf den Keilkopf 2 zunimmt, wie dies ebenfalls insbesondere der Darstellung nach Fig. 1 entnommen werden kann. Auch die Keilfläche 5 kann mit einer Saftrille 16 ausgerüstet sein, wie sich aus Fig. 1 oder 5 ergibt.

Dem Keilkopf 2 gegenüberliegend ist eine Schneide 6 vorgesehen. Dabei gehen die Keilflächen 4 und 5 in die Schneide 6 unter Zwischenschaltung jeweils einer Ansatzfläche 22 über. Diese Ansatzfläche 22 ist einerseits mit dreieckförmig ausgebildeten Widerhaken 17 sowie einer Führungsrippe 18 ausgerüstet. Dabei dienen die Widerhaken 17 insbesondere dem Herausfallschutz bei einem Einsetzen des Keils 1 in eine Fallrinne oder nach einem ersten Eintreiben desselben in zu spaltendes Holz. Der Sinn und Zweck der Führungsrippe 18 besteht darin, eine Führung für den Keil 1 zu bilden, um sicherzustellen, dass dieser vorzugsweise gradlinig in das zu spaltende Holz eingetrieben werden kann. Die Führungsrippe 18 ist deshalb bevorzugterweise in Längsrichtung 26 des Keils 1 länger als die Widerhaken 17 ausgebildet und im Übrigen bevorzugterweise mittig zur Schneide 6 ausgerichtet.

Die Schneide 6 verfügt ihrerseits über eine Schneidkante 9 sowie Schneidflächen 7 und 8. Dabei stehen die Schneidflächen 7 und 8 unter einem spitzeren Winkel als die Ansatzflächen 22 oder die Keilflächen 4 und 5. Auf diese Weise wird eine besonders spitz zulaufende Schneidkante 9 erzeugt, die darüber hinaus robust ist und wenig dazu neigt, abzustumpfen.

Im Übrigen kann vorgesehen sein, dass die Ansatzflächen 2 eine Abschrägung 10 in Richtung auf die Schneide 6 bereitstellen, so dass im Ergebnis die Schneide 6 mit Bezug auf die Blattebene beispielsweise nach den Figuren 7 und 8 schmaler als der Keilkopf 2 ausgebildet ist. Ein vereinfachtes Ansetzen des Keils im bestimmungsgemäßen Verwendungsfall ist so erreicht.

Die Stirnflächen 21 des Keils 1 sind bevorzugterweise glatt ausgeführt. Im oberen Teil des Keils 1, d.h. keilkopfnah können insbesondere zum Zwecke der Gewichtsreduzierung Kerben 19 vorgesehen sein. Im Übrigen ermöglichen die Kerben 19 eine verbesserte Handhabung durch einen Verwender, da sie ein Ergreifen und Festhalten des Keils begünstigen.

Im Übrigen ist gemäß der zweiten Ausführungsform nach den Figuren 7 bis 12 vorgesehen, dass die Ansatzflächen 2 eine Abschrägung 10 in Richtung auf die Schneide 6 bereitstellen, so dass im Ergebnis die Schneide 6 mit Bezug auf die Blattebene beispielsweise nach den Figuren 1 und 4 schmaler als der Keilkopf 2 ausgebildet ist. Ein vereinfachtes Ansetzen des Keils im bestimmungsgemäßen Verwendungsfall ist so erreicht. Die im Vergleich zum Keilkopf 2 schmaler ausgestaltete Schneide 6 erbringt einen weiteren Vorteil. Im Zuge des Eintreibens des Drehspaltkeils 1 in ein zu spaltendes Holz verdreht sich der Spaltkeil um seine Hochachse. Diese Verdrehbewegung erfolgt bestimmungsgemäß. Infolge dieser Verdrehbewegung wirken aber auf die außenliegenden Randbereiche der Scheide 6 zum Teil extreme Kräfte, die zu einem Verbiegen der Schneide 6 in diesem Bereich führen können. Auch ein Abrechen der außenliegenden Randbereiche der Scheide 6 ist infolge einer solchen Kraftbeaufschlagung denkbar. Die mit der Erfindung vorgeschlagene Abschrägung 10 schafft hier Abhilfe. Der Krafteintrag in die Scheide 6 erfolgt auf Grund der Abschrägung 10 nicht punktuell, sondern flächenhaft. Hierdurch bedingt ist die Materialbelastung verringert, sodass auf Grund der erfindungsgemäßen Ausgestaltung die Gefahr von Schneidenbeschädigungen durch Verbiegen oder gar Abrechen verringert ist.

### Bezugszeichenliste

- 1.: Spaltkeil
- 2.: Keilkopf
- 3.: Schlagfläche
- 4.: erste Keilfläche
- 5.: zweite Keilfläche
- 6.: Schneide
- 7.: Schneidfläche
- 8.: Schneidfläche
- 9.: Schneidkante
- 10.: Abschrägung
- 11.: Sägezahnprofil
- 12.: Rippe
- 13.: Saftrille
- 14.: Fischgratprofil
- 15.: Rille
- 16.: Saftrille
- 17.: Widerhaken
- 18.: Führungsrippe
- 19.: Kerbe
- 20.: Grundkörper
- 21.: Stirnfläche
- 22.: Ansatzfläche
- 23.: Querrille
- 24.: Längsachse
- 25.: Querachse
- 26: Längsrichtung

## Patentansprüche

1. Spaltkeil mit einem eine erste Keilfläche (4) und eine zweite Keilfläche (5) bereitstellenden Grundkörper (20) aus Aluminium, der einendseitig eine Schneide (6) und anderendseitig einen eine Schlagfläche (3) bereitstellenden Keilkopf (2) aufweist, wobei die erste Keilfläche (4) ein Sägezahnprofil (11) wobei die Keilflächen (4, 5) in Richtung auf die Schneide (6) jeweils in eine Ansatzfläche (22) übergehen, **dadurch gekennzeichnet, dass** die zweite Keilfläche (5) ein Fischgratprofil (14) aufweist, und die in Verlängerung der ersten Keilfläche (4) ausgebildete Ansatzfläche (22) dreieckförmig ausgebildete Widerhaken (17) und eine Führungsrippe (18) aufweist, welche Führungsrippe (18) in Längsrichtung verlaufend mittig zur Schneidkante (9) der Schneide (6) ausgebildet ist.

2. Spaltkeil nach Anspruch 1, **dadurch gekennzeichnet, dass** das Sägezahnprofil (11) aus einzelnen zueinander beabstandet angeordneten Rippen (12) gebildet ist.

3. Spaltkeil nach Anspruch 2, **dadurch gekennzeichnet, dass** die Rippen (12) parallel zur Schneidkante (9) der Schneide (6) verlaufend ausgebildet sind.

4. Spaltkeil nach Anspruch 1, **dadurch gekennzeichnet, dass** das Fischgratprofil (12) Rillen (15) aufweist, die zur Schneidkante (9) der Schneide (6) querverlaufend ausgebildet sind.

5. Spaltkeil nach Anspruch 4, **dadurch gekennzeichnet, dass** die Rillen (15) V-förmig ausgebildet sind.

6. Spaltkeil nach Anspruch 4 oder 5, **dadurch gekennzeichnet, dass** der Abstand zwischen zwei benachbarten Rillen (15) in Richtung auf den Keilkopf (2) zunimmt.

7. Spaltkeil nach einem der vorhergehenden Ansprüche, **dadurch gekennzeichnet, dass** die erste und die zweite Keilfläche (4, 5) jeweils eine Saftrille (13, 16) aufweisen.

8. Spaltkeil nach einem der vorhergehenden Ansprüche, **dadurch gekennzeichnet, dass** die Schlagfläche (3) des Keilkopfes (2) ballig ausgebildet ist.

9. Spaltkeil nach einem der vorhergehenden Ansprüche, **dadurch gekennzeichnet, dass** der Keilkopf (2) im Querschnitt oval, vorzugsweise ellipsenförmig ausgebildet ist.

10. Spaltkeil nach einem der vorhergehenden Ansprüche ausgebildet als Drehspaltkeil mit zueinander verdreht ausgebildeten Keilflächen (4, 5)

## Claims

1. A splitting wedge comprising a base body (20) made of aluminum which provides a first wedge surface (4) and a second wedge surface (5) and which comprises a cutter (6) at the one end and a wedge head (2) providing a striking face (3) at the other end, wherein the first wedge surface (4) comprises a saw tooth profile (11), **characterized in that** the second wedge surface (5) comprises a herringbone profile (14) and wherein the wedge surfaces (4, 5) respectively merge into an attachment surface (22) in the direction of the cutter (6), which attachment surface (22) that is formed in continuation of the first wedge surface (4) comprises triangular barbs (17) and a guide rib (18), which guide rib (18) extends in the longitudinal direction centrally with respect to the cutting edge (9) of the cutter (6).

2. A splitting wedge according to claim 1, **characterized in that** the saw tooth profile (11) is formed by individual ribs (12) that are spaced from each other.

3. A splitting wedge according to claim 2, **characterized in that** the ribs (12) extend parallel to the cutting edge (9) of the cutter (6).

4. A splitting wedge according to claim 1, **characterized in that** the herringbone profile (12) comprises grooves (15) which extend transversely to the cutting edge (9) of the cutter (6).

5. A splitting wedge according to claim 4, **characterized in that** the grooves (15) are V-shaped.

6. A splitting wedge according to claim 4 or 5, **characterized in that** the distance between two adjacent grooves (15) increases in the direction of the wedge head (2).

7. A splitting wedge according to one of the preceding claims, **characterized in that** the first and the second wedge surfaces (4, 5) respectively comprise a sap groove (13, 16).

8. A splitting wedge according to one of the preceding claims, **characterized in that** the striking face (3) of the wedge head (2) is crowned.

9. A splitting wedge according to one of the preceding claims, **characterized in that** the cross section of the wedge head (29) is oval, preferably elliptical.

10. A splitting wedge according to one of the preceding claims, designed as turning splitting wedge having wedges surfaces (4, 5) which are twisted towards each other.

## Revendications

1. Coin à refendre comprenant un corps de base (20) en aluminium qui fournit une première surface de coin (4) et une deuxième surface de coin (5) et qui comprend une lame (6) à une extrémité et une tête de coin (2) fournissant une surface de frappe (3) à l'autre extrémité, la première surface de coin (4) comprenant un profil en dent de scie (11), **caractérisé en ce que** la deuxième surface de coin (5) comprend un profil chevron (14) et les surfaces de coin (4, 5) se continuent chacune dans une surface de rallonge (22) dans la direction vers la lame (6), la surface de rallonge (22) formée en prolongation de la première surface de coin (4) comprenant des barbelures (17) triangulaires et une nervure de guidage (18), laquelle nervure de guidage (18) s'étend dans la direction longitudinale centralement par rapport au bord de coupe (9) de la lame (6).

2. Coin à refendre selon la revendication 1, **caractérisé en ce que** le profil en dent de scie (11) est formé par des nervures (12) individuelles espacées les unes par rapport aux autres.

3. Coin à refendre selon la revendication 2, **caractérisé en ce que** les nervures (12) s'étendent parallèlement au bord de coupe (9) de la lame (6).

4. Coin à refendre selon la revendication 1, **caractérisé en ce que** le profil chevron (12) comprend des rainures (15) qui s'étendent transversalement au bord de coupe (9) de la lame (6).

5. Coin à refendre selon la revendication 4, **caractérisé en ce que** les rainures (15) sont formées en V.

6. Coin à refendre selon la revendication 4 ou la revendication 5, **caractérisé en ce que** la distance entre deux rainures (15) adjacentes augmente dans la direction vers la tête de coin (2).

7. Coin à refendre selon l'une des revendications précédentes, **caractérisé en ce que** la première et la deuxième surfaces de coin (4, 5) comprennent chacune une rainure pour jus (13, 16).

8. Coin à refendre selon l'une des revendications précédentes, **caractérisé en ce que** la surface de frappe (3) de la tête de coin (2) est bombée.

9. Coin à refendre selon l'une des revendications précédentes, **caractérisé en ce que** la section transversale de la tête de coin (2) est ovale, de préférence elliptique.

10. Coin à refendre selon l'une des revendications précédentes configuré en tant que coin à refendre rotatif comprenant des surfaces de coin (4, 5) tournées les unes vers les autres.
